(19) Europäisches Patentamt
European Patent Office
Office européen des brevets

(11) **EP 3 451 525 B1**

(12) **FASCICULE DE BREVET EUROPEEN**

(45) Date de publication et mention de la délivrance du brevet:
**08.01.2020 Bulletin 2020/02**

(51) Int Cl.:
*H02P 21/14* (2016.01)  *H02P 23/14* (2006.01)
*H02P 21/22* (2016.01)  *H02P 21/18* (2016.01)
*H02P 21/20* (2016.01)

(21) Numéro de dépôt: **18178970.2**

(22) Date de dépôt: **21.06.2018**

(54) **PROCÉDÉ D'IDENTIFICATION DES PARAMÈTRES DE SATURATION MAGNÉTIQUE D'UN MOTEUR ÉLECTRIQUE ASYNCHRONE**

**VERFAHREN ZUR IDENTIFIZIERUNG DER MAGNETISCHEN SÄTTIGUNGSPARAMETER EINES ASYNCHRONEN ELEKTROMOTORS**

**METHOD FOR IDENTIFYING MAGNETIC SATURATION PARAMETERS OF AN ASYNCHRONOUS ELECTRIC MOTOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2017 FR 1770913**

(43) Date de publication de la demande:
**06.03.2019 Bulletin 2019/10**

(73) Titulaire: **Schneider Toshiba Inverter Europe SAS 27120 Pacy sur Eure (FR)**

(72) Inventeurs:
• **JEBAI, Al Kassem**
 **27120 Vernon (FR)**
• **MALRAIT, François**
 **27120 Jouy sur Eure (FR)**
• **DEVOS, Thomas**
 **78955 Carrières sous Poissy (FR)**

• **DUTREY, Alain**
 **78100 Saint Germain en Laye (FR)**

(74) Mandataire: **Dufresne, Thierry**
 **Schneider Electric Industries SAS**
 **Service Propriété Industrielle**
 **35 rue Joseph Monier - CS 30323**
 **92506 Rueil-Malmaison Cedex (FR)**

(56) Documents cités:
**WO-A2-2012/123255  JP-A- 2010 068 627**

• **MIKAELA RANTA ET AL: "Online identification of parameters defining the saturation characteristics of induction machines", ELECTRICAL MACHINES (ICEM), 2012 XXTH INTERNATIONAL CONFERENCE ON, IEEE, 2 septembre 2012 (2012-09-02), pages 1027-1033, XP032464842, DOI: 10.1109/ICELMACH.2012.6350002 ISBN: 978-1-4673-0143-5**

## Description

### Domaine technique de l'invention

La présente invention se rapporte à un procédé d'identification des paramètres de saturation magnétique d'un moteur électrique de type asynchrone. L'invention concerne également un système d'identification des paramètres de saturation magnétique d'un moteur électrique de type asynchrone.

### Etat de la technique

Pour optimiser les performances statiques et dynamiques d'un moteur électrique, il est important de connaître la caractéristique de saturation magnétique du flux de magnétisation du moteur.

En effet, la connaissance d'une telle caractéristique permet de :

- Améliorer la stabilité et les performances du moteur électrique en fonctionnement à très grande vitesse ;
- Améliorer le couple maximal fourni par le moteur électrique ;
- Réduire la consommation en courant par le moteur électrique ;
- Augmenter l'efficacité énergétique du moteur électrique.

Cette caractéristique de saturation magnétique s'exprime par une courbe de saturation magnétique du moteur électrique, représentée par la relation entre le flux de magnétisation (appelé également flux magnétisant) et le courant de magnétisation. Pour connaître la caractéristique de saturation magnétique, il est donc nécessaire de déterminer cette courbe, de la modéliser et d'identifier les paramètres de saturation magnétique qui permettent de l'approximer au mieux.

Il existe des solutions pour identifier les paramètres de saturation magnétique d'un moteur électrique de type synchrone à aimants permanents. Une telle solution est décrite dans la demande de brevet WO2012/123255A2**.** Cependant, celle-ci n'est pas adaptée pour déterminer les paramètres de saturation magnétique d'un moteur électrique de type asynchrone.

Le document JP2010-068627 décrit également une solution de détermination des paramètres de saturation magnétique d'un moteur asynchrone.

Le but de l'invention est donc de proposer un procédé d'identification des paramètres de saturation magnétique qui soit adapté à un moteur électrique de type asynchrone (à induction).

Le procédé de l'invention pourra être mis en oeuvre alors que le moteur électrique est en fonctionnement, à vide ou en charge.

### Exposé de l'invention

Ce but est atteint par un procédé d'identification des paramètres de saturation magnétique d'un moteur électrique asynchrone, ledit procédé consistant à mettre en œuvre une séquence comprenant une ou plusieurs itérations, chaque itération étant définie avec un rang i, avec i allant de 1 à n, chaque itération de rang i lorsque i est supérieur ou égal à 2 comprenant les étapes suivantes :

a) Application d'une trajectoire à une tension de référence ou à un flux de référence, sur une plage de référence présentant une amplitude de tension ou de flux entre une valeur minimale et une valeur maximale,
b) Acquisition des valeurs des courants dans les phases du moteur électrique et détermination du courant de magnétisation correspondant,
c) Estimation du flux de magnétisation,
d) Construction d'un profil réel pour l'itération de rang i comprenant ledit flux de magnétisation estimé en fonction du courant de magnétisation mesuré,
e) Détermination des paramètres de saturation magnétique correspondant au profil réel de l'itération de rang i,
f) Détermination d'un écart entre ledit profil réel pour l'itération de rang i et un profil théorique construit à partir des paramètres de saturation magnétique obtenus lors de l'itération de rang i-1,
g) Validation des paramètres de saturation magnétique obtenus lors de l'itération de rang i lorsque ledit écart est inférieur à un seuil et lorsque la plage de référence appliquée en entrée présente une amplitude suffisante.

Selon un aspect particulier de l'invention, lorsque ledit écart est supérieur audit seuil, il consiste à mettre en œuvre l'étape suivante :

- Comparaison dudit écart de l'itération de rang i par rapport à l'écart obtenu lors de l'itération de rang i-1,

i. Si ledit écart de l'itération de rang i est inférieur à l'écart obtenu pour l'itération de rang i-1, mémorisation des paramètres de saturation magnétique obtenus pour l'itération de rang i et mise en œuvre de l'itération de rang i+1 avec une nouvelle plage de référence,
ii. Si ledit écart de l'itération de rang i est supérieur à l'écart obtenu lors de l'itération de rang i-1, mémorisation des paramètres de saturation magnétique obtenus lors de l'itération de rang i-2 et mise en œuvre de l'itération de rang i+1 avec une nouvelle plage de référence.

Selon un aspect particulier de l'invention, le procédé comporte, après l'étape f), une étape de vérification de la plage de référence utilisée par rapport à une plage seuil.

Selon un aspect particulier de l'invention, le procédé comporte, après ladite étape de vérification, une étape de mise à jour des paramètres de saturation magnétique avec les paramètres de saturation magnétique calculés lors de l'itération de rang i lorsque la plage de référence appliquée est inférieure à ladite plage seuil.

Selon un aspect particulier de l'invention, le procédé comporte une étape de modification de ladite plage de référence après ladite étape de mise à jour des paramètres de saturation magnétique et une mise en œuvre de l'itération de rang i+1 avec une nouvelle plage de référence.

Selon un aspect particulier de l'invention, pour l'itération de rang i=1, les paramètres de saturation magnétique sont déterminés de sorte que le flux de magnétisation estimé soit sensiblement égal au flux nominal.

L'invention concerne également un système d'identification des paramètres de saturation magnétique d'un moteur électrique asynchrone, ledit système étant configuré pour mettre en œuvre une séquence comprenant une ou plusieurs itérations, chaque itération étant définie avec un rang i, avec i allant de 1 à n, et pour chaque itération de rang i lorsque i est supérieur ou égal à 2, le système comporte :

 a) Un module d'application d'une trajectoire à une tension de référence ou à un flux de référence, sur une plage de référence,
 b) Un module d'acquisition des courants dans les phases du moteur électrique et de détermination du courant de magnétisation correspondant,
 c) Un module d'estimation du flux de magnétisation,
 d) Un module de construction d'un profil réel pour l'itération de rang i comprenant ledit flux de magnétisation estimé en fonction du courant de magnétisation mesuré,
 e) Un module de détermination des paramètres de saturation magnétique correspondant au profil réel de l'itération de rang i,
 f) Un module de détermination d'un écart entre ledit profil réel pour l'itération de rang i et un profil théorique construit à partir des paramètres de saturation magnétique obtenus lors de l'itération de rang i-1,
 g) Un module de validation des paramètres de saturation magnétique obtenus lors de l'itération de rang i lorsque ledit écart est inférieur à un seuil et lorsque la plage de référence appliquée en entrée présente une amplitude suffisante.

Selon un aspect particulier du système, lorsque ledit écart est supérieur audit seuil, ledit système est configuré pour exécuter un module de comparaison dudit écart de l'itération de rang i par rapport à l'écart obtenu lors de l'itération de rang i-1, et :

 i. Si ledit écart de l'itération de rang i est inférieur à l'écart obtenu pour l'itération de rang i-1, ledit système est configuré pour exécuter un module de mémorisation des paramètres de saturation magnétique obtenus pour l'itération de rang i et de mise en œuvre de l'itération de rang i+1 avec une nouvelle plage de référence,
ii. Si ledit écart de l'itération de rang i est supérieur à l'écart obtenu pour l'itération de rang i-1, ledit système est configuré pour exécuter un module de mémorisation des paramètres de saturation magnétique obtenus lors de l'itération de rang i-2 et de mise en œuvre de la phase de rang i+1 avec une nouvelle plage de référence.

Selon un autre aspect de l'invention, le système comporte un module de vérification de la plage de référence utilisée par rapport à une plage seuil, exécuté lorsque ledit écart est inférieur à un seuil.

Selon un autre aspect de l'invention, le système comporte un module de mise à jour des paramètres de saturation magnétique avec les paramètres de saturation magnétique calculés lors de l'itération de rang i lorsque la plage de référence appliquée est inférieure à ladite plage seuil.

Selon un autre aspect de l'invention, le système comporte un module de modification de ladite plage de référence après ladite étape de mise à jour des paramètres de saturation magnétique et une mise en œuvre de l'itération de rang i+1 avec une nouvelle plage de référence.

Selon un autre aspect de l'invention, pour l'itération de rang i=1, les paramètres de saturation magnétique sont déterminés de sorte que le flux de magnétisation estimé soit sensiblement égal au flux nominal.

L'invention concerne également un variateur de vitesse qui comporte un système d'identification tel que défini ci-dessus.

**Brève description des figures**

D'autres caractéristiques et avantages vont apparaître dans la description détaillée qui suit, faite en liaison avec les figures annexées listées ci-dessous :

- La figure 1 illustre, sous la forme d'un diagramme, le principe du système d'identification de l'invention, mis en œuvre dans le cadre d'un contrôle vectoriel de flux, sans capteur, du moteur électrique ;
- La figure 2 illustre, sous la forme d'un diagramme, le principe du système d'identification de l'invention, mis en œuvre dans le cadre d'un contrôle scalaire en tension du moteur électrique ;
- La figure 3 représente un diagramme illustrant la séquence du procédé d'identification des paramètres de saturation magnétique ;
- Les figures 4A et 4B représentent, respectivement, un exemple de trajectoire de flux et de trajectoire de tension, appliqué dans la mise en œuvre du procédé de l'invention ;

- La figure 5 représente la courbe réelle et la courbe théorique de saturation magnétique (courant/flux) obtenues lors de la mise en œuvre de l'invention ;
- Les figures 6 et 7 illustrent l'intérêt de l'invention dans le cas d'un mode de fonctionnement particulier du moteur électrique asynchrone ;
- Les figures 8 et 9 illustrent l'intérêt de l'invention dans le cas d'un autre mode de fonctionnement particulier du moteur électrique asynchrone.

## Description détaillée d'au moins un mode de réalisation

L'invention s'applique à la commande d'un moteur électrique de type asynchrone. Elle concerne la détermination de la caractéristique de saturation magnétique du moteur. Cette caractéristique se définit à partir de plusieurs paramètres de saturation magnétique.

Dans la suite de la description, l'expression "profil de saturation magnétique" se matérialise par une courbe reliant le courant de magnétisation et le flux de magnétisation (appelé aussi flux magnétisant).

Dans la suite de la description, les notations suivantes seront employées :

- $\overline{\omega}$ : vitesse de référence.
- $\hat{\omega}$ : vitesse estimée.
- $\theta_s$ : angle électrique.
- $\overline{i_d}$ : courant de référence sur l'axe d (courant de magnétisation ou courant à vide).
- $\overline{i_q}$ : courant de référence sur l'axe q.
- $i_d$ : courant mesuré sur l'axe d (courant de magnétisation ou courant à vide).
- $i_q$ : courant mesuré sur l'axe q.
- $\overline{\phi}$ : flux de référence.
- $\hat{\phi}$ : flux estimé.
- $\phi_n$ : flux nominal.
- $L_0$, $\alpha$ et $\beta$ : paramètres de la courbe de saturation magnétique (ce modèle est décrit ci-après).
- $u_d$ : tension moteur sur l'axe d.
- $u_q$ : tension moteur sur l'axe q.
- $u_a$, $u_b$ et $u_c$ : tensions moteur.
- $i_a$, $i_b$ et $i_c$ : courants moteur.

Le moteur électrique est avantageusement de type triphasé.

Le procédé d'identification de ces paramètres de saturation magnétique est applicable pour un moteur électrique de type asynchrone commandé par une électronique de commande faisant appel à un contrôle vectoriel de flux (sans capteur de vitesse) ou à un contrôle de type scalaire (en U/F).

Le procédé d'identification de l'invention fonctionne lorsque le moteur électrique est en fonctionnement normal, qu'il soit en charge ou à vide.

La durée de la procédure d'identification est très courte, par exemple de l'ordre de 60 sec environ, ce qui est totalement transparent dans certaines applications (application de pompage par exemple).

Le procédé peut également être mis en œuvre lors d'une étape de paramétrage ("commissionning") avant le fonctionnement normal du moteur dans le cadre de son application.

Le procédé peut être mis en œuvre une seule fois pour identifier les paramètres de saturation magnétique du moteur électrique. Il pourra être remis en œuvre ultérieurement, par exemple en cas d'usure du moteur.

Un variateur de vitesse comporte classiquement, mais de manière non limitative :

- Un étage redresseur connecté à une source d'alimentation électrique pour recevoir une tension alternative ; Le redresseur pourra être de type passif tel qu'un pont de diodes ou actif à base de transistors commandés ;

- Un bus continu d'alimentation sur lequel est appliqué la tension redressée par l'étage redresseur et comprenant notamment deux lignes de bus et au moins un condensateur de bus connecté entre les deux lignes pour stabiliser la tension du bus ;

- Un étage onduleur (INV) connecté en sortie du bus continu et destiné à découper la tension continue fournie par le bus en une tension variable à destination du moteur électrique ; L'étage onduleur comporte plusieurs bras de commutation comportant chacun des transistors de puissance commandés pour appliquer la tension variable au moteur électrique.

Le variateur de vitesse intègre avantageusement une unité de commande destinée à assurer la commande des transistors de l'étage onduleur. L'unité de commande s'appuie sur une loi de commande pour déterminer les tensions à appliquer au moteur électrique ; La loi de commande peut être notamment de type vectoriel ou scalaire.

Le procédé d'identification est mis en œuvre par ladite unité de commande.

Le système d'identification de l'invention comporte avantageusement ladite unité de commande ainsi que les blocs ou modules logiciels exécutés par ladite unité de commande pour mettre en œuvre le procédé d'identification de l'invention. Des modules logiciels adaptés seront exécutés pour effectuer une ou plusieurs des étapes du procédé d'identification.

Le système d'identification comporte avantageusement des moyens de mesure, notamment des capteurs de courant destinés à mesurer les courants $i_a$, $i_b$, $i_c$ présents dans les trois phases du moteur M. Un module d'acquisition présent dans l'unité de commande est adapté pour recueillir toutes les mesures effectuées.

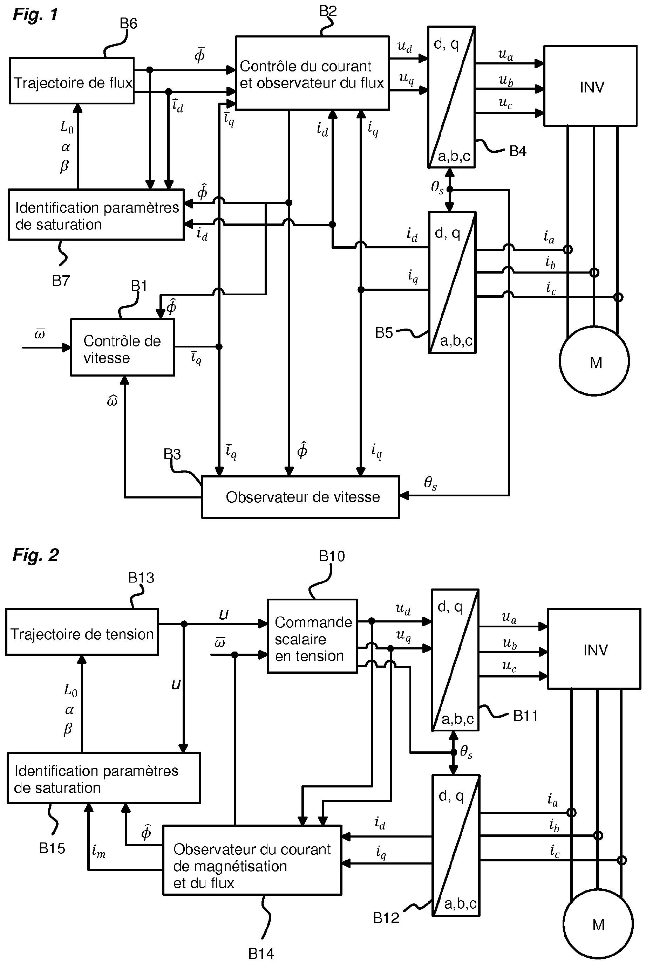

En référence à la figure 1, une loi de contrôle de type vectoriel peut comporter les caractéristiques principales suivantes :

- Un bloc B1 de contrôle de vitesse recevant une référence de vitesse $\overline{\omega}$ en entrée, un flux de magnétisation estimé $\hat{\phi}$ et une vitesse estimée $\hat{\omega}$, et destiné à déterminer une référence de courant de couple $\overline{i_q}$ ;

- Un bloc B2 de contrôle du courant et observateur du flux recevant en entrée une référence de flux $\overline{\phi}$, une référence de courant de flux $\overline{i_d}$ et la référence de courant de couple $\overline{i_q}$ et destiné à déterminer une tension moteur $u_d$ sur l'axe d et une tension moteur $u_q$ sur l'axe q ;

- Un bloc B3 observateur de vitesse recevant en entrée le courant de couple $i_q$ mesuré, le flux de magnétisation estimé $\hat{\phi}$ et la référence de courant de couple $\overline{i_q}$ et destiné à déterminer la vitesse estimée $\hat{\omega}$ et l'angle d'orientation électrique $\theta_s$ ;

- Un premier bloc de transformation B4 pour appliquer un changement de repère, du repère d,q vers le repère a,b,c. Ce bloc reçoit en entrée la tension moteur $u_d$ sur l'axe d et la tension moteur $u_q$ sur l'axe q et détermine, à partir de l'angle $\theta_s$, les tensions $u_a$, $u_b$, $u_c$ à appliquer sur les trois phases du moteur électrique ;

- Un deuxième bloc de transformation B5 pour appliquer un changement de repère, du repère a,b,c vers le repère d,q. Ce bloc reçoit en entrée les courants $i_a$, $i_b$, $i_c$ mesurés sur les trois phases du moteur électrique et détermine à partir de l'angle $\theta_s$, le courant $i_d$ sur l'axe d et le courant $i_q$ sur l'axe q.

En référence à la figure 2, dans une loi de contrôle de type scalaire, la référence de vitesse $\overline{\omega}$ impose une fréquence à l'étage onduleur du variateur et par voie de conséquence au moteur, ce qui détermine sa vitesse de rotation. La tension d'alimentation du moteur est en relation directe avec la fréquence. Une telle loi de contrôle peut comporter les caractéristiques suivantes :

- Un bloc B10 de commande scalaire en tension recevant en entrée une tension de référence u (sous la forme d'un vecteur) et une référence de vitesse $\overline{\omega}$ et détermine la tension moteur $u_d$ sur l'axe d et la tension moteur $u_q$ sur l'axe q, ainsi que l'angle $\theta_s$ ;

- Un premier bloc B11 de transformation pour appliquer un changement de repère, du repère d,q vers le repère a,b,c. Ce bloc reçoit en entrée la tension moteur $u_d$ sur l'axe d et la tension moteur $u_q$ sur l'axe q et détermine à partir de l'angle $\theta_s$ les tensions $u_a$, $u_b$, $u_c$ à appliquer sur les trois phases du moteur électrique ;

- Un deuxième bloc de transformation B12 pour appliquer un changement de repère, du repère a,b,c vers le repère d,q. Ce bloc reçoit entrée les courants $i_a$, $i_b$, $i_c$ mesurés sur les trois phases du moteur électrique et détermine à partir de l'angle $\theta_s$, le courant $i_d$ sur l'axe d et le courant $i_q$ sur l'axe q.

Le procédé d'identification de l'invention s'appuie notamment sur l'obtention d'une variation du flux de magnétisation dans le moteur électrique.

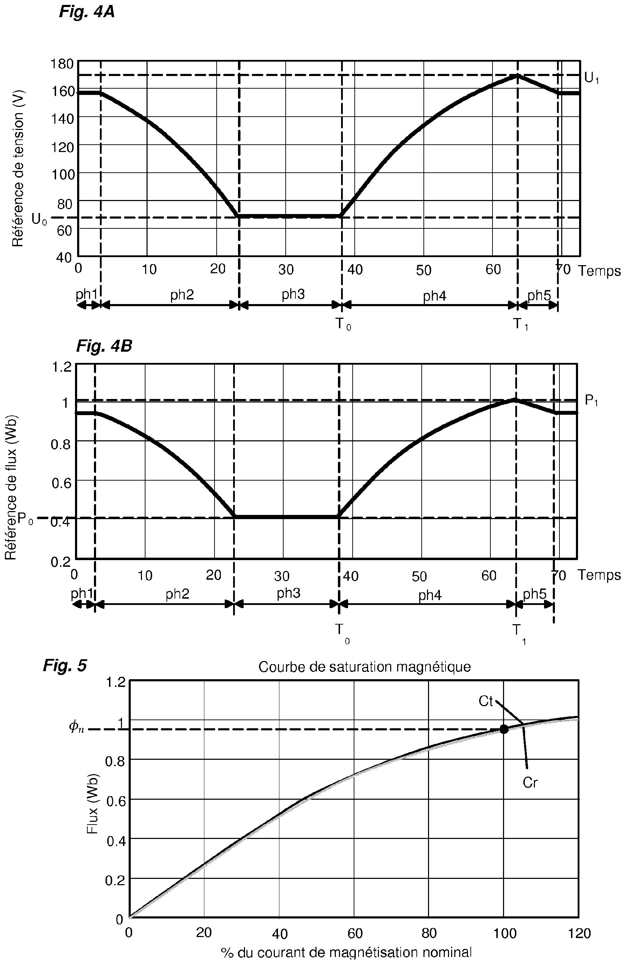

Pour un contrôle de type vectoriel de flux, cette variation de flux de magnétisation est obtenue en faisant suivre au flux de référence appliqué en entrée de la loi de commande, une trajectoire déterminée. A titre d'exemple et de manière non limitative, la figure 4B représente une trajectoire suivie par le flux de référence dans le cadre de l'invention. Pour ce contrôle, un bloc B6 de trajectoire de flux est ajouté en entrée pour déterminer la référence de flux à appliquer. L'estimation du flux de magnétisation $\hat{\phi}$ est ensuite réalisée dans le bloc B2 de contrôle du courant et d'observation du flux.

Pour un contrôle de type scalaire, cette variation de flux de magnétisation est obtenue en faisant suivre une trajectoire déterminée à la tension de référence appliquée en entrée de la loi de commande. La fréquence appliquée en entrée est maintenue constante. A titre d'exemple et de manière non limitative, la figure 4A représente une trajectoire suivie par la tension de référence dans le cadre de l'invention. Pour ce contrôle, un bloc B13 de trajectoire de tension est ajouté en entrée pour déterminer la référence de tension à appliquer. L'estimation du flux de magnétisation $\hat{\phi}$ est réalisée dans un bloc B14 d'observation du courant de magnétisation et du flux de magnétisation.

Pour les deux types de loi de commande possibles, le système d'identification comporte également un bloc B7, B15 d'identification des paramètres de saturation magnétique.

Dans le cas de la loi de commande de type vectoriel, le bloc B7 d'identification reçoit en entrée le courant de magnétisation $i_d$ (correspondant au courant mesuré sur l'axe d), le flux estimé $\hat{\phi}$, la référence de courant $\overline{i_d}$ sur l'axe d et la référence de flux $\overline{\phi}$.

Dans le cas de la loi de commande de type scalaire, le bloc d'identification reçoit en entrée le courant de magnétisation, le flux estimé et les tensions moteurs sur l'axe d et sur l'axe q.

Pour les deux modes de contrôle (scalaire ou vectoriel), l'identification des paramètres de saturation magnétique est réalisée de la manière décrite ci-dessous.

Elle consiste à mettre en œuvre une séquence d'observation et d'identification comprenant une ou plusieurs itérations, chaque itération étant définie par un rang i, avec i allant de 1 à n.

Une séquence d'observation et d'identification de rang i, lorsque i est supérieur ou égal à 2, peut comporter les étapes suivantes :

- Une étape d'application d'une référence de tension ou d'une référence de flux en entrée de la loi de commande suivant une plage de référence, selon la trajectoire prédéfinie, de manière à obtenir une variation du flux de magnétisation. Le bloc B6 ou B13 de création de trajectoire est alors exécuté.

- Une étape de mesure des courants dans les trois phases du moteur et de détermination du courant sur l'axe d (courant de magnétisation).

- Une étape d'estimation du flux de magnétisation. Le bloc B2 ou B14 est alors exécuté.

- Une étape de construction du profil réel exprimant au cours du temps la variation du flux de magnétisation estimé en fonction du courant de magnétisation déterminé. Le bloc B7 ou B15 est alors exécuté.

- Une étape d'identification des paramètres de saturation magnétique pour l'itération en cours en se basant sur ledit profil réel construit. Le bloc B7 ou B15 est exécuté.

- Une étape de détermination d'un écart entre le profil réel construit et un profil théorique obtenu en tenant compte des paramètres de saturation magnétique déterminés lors de l'itération précédente i-1. Pour l'itération en cours, les paramètres de saturation magnétique ne sont pas encore déterminés. Le bloc B7 ou B15 est exécuté.

- Si cet écart est inférieur à un seuil prédéfini alors une étape de décision sera ensuite exécutée.

- Si cet écart est supérieur audit seuil prédéfini, deux cas sont possibles :

  - Si l'écart déterminé lors de cette itération i est inférieur à l'écart obtenu lors de l'itération précédente i-1, les paramètres de saturation magnétique sont mis à jour avec les paramètres obtenus pour l'itération en cours. Une nouvelle itération i+1 est ensuite lancée.

  - Si l'écart déterminé lors de cette itération i est supérieur à l'écart obtenu lors de l'itération précédente i-1, les paramètres de saturation magnétique sont réinitialisés avec ceux obtenus lors de l'itération i-2. Une nouvelle itération i+1 est ensuite lancée.

Une première étape peut consister à initialiser les paramètres de saturation magnétique avec les paramètres d'un modèle linéaire de saturation magnétique. Ces paramètres sont en général appliqués par défaut en l'absence d'un procédé d'identification de paramètres plus précis.

Pour simplifier le principe du procédé d'identification, pour l'itération de rang 1, une première séquence d'observation et d'identification peut d'abord être mise en œuvre pour obtenir un premier jeu de paramètres (différents des paramètres linéaires définis ci-dessus). La plage de référence employée dans la trajectoire de flux ou de tension lors de cette première séquence permet d'obtenir une courbe de saturation magnétique située autour du flux nominal.

L'étape de décision consiste à s'assurer que la plage de référence appliquée en entrée est suffisante. Un même jeu de paramètres de saturation magnétique déterminé doit pouvoir s'appliquer sur une partie relativement étendue de la courbe de saturation magnétique.

Les itérations successives permettent d'élargir la plage de référence tant qu'un jeu de paramètres de saturation magnétique reste valable pour caractériser la courbe de saturation magnétique.

Ainsi, lors de l'étape de décision, deux cas peuvent se présenter :

- Si la plage de référence n'est pas suffisante, une nouvelle itération est lancée avec une nouvelle plage de référence plus large que celle de l'itération qui vient de se terminer. Il s'agira donc d'élargir la plage de référence de tension ou de flux appliquée en entrée pour balayer une zone plus large de la courbe de saturation magnétique.

- Si la plage de référence est suffisante, une séquence optionnelle de validation peut être exécutée.

Cette séquence optionnelle de validation consiste à s'assurer que les paramètres de saturation magnétique présents en mémoire à la fin de la dernière itération effectuée permettent bien d'obtenir un profil théorique de saturation magnétique qui présente un écart inférieur audit seuil prédéfini par rapport au profil réel de saturation magnétique.

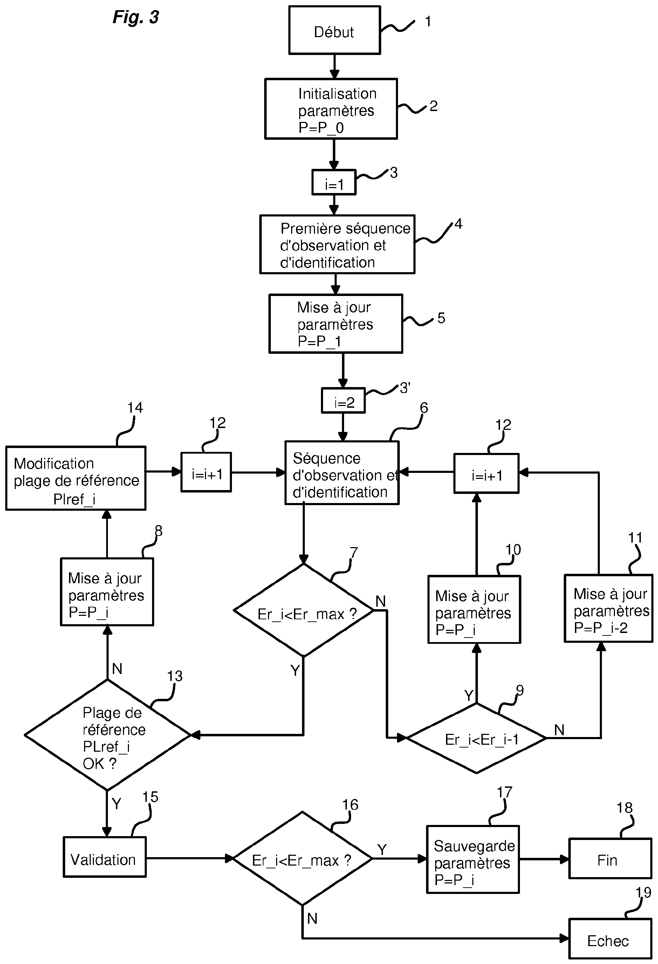

La figure 3 représente de manière schématique un algorithme qui peut être suivi pour mettre en œuvre l'identification des paramètres de saturation magnétique. Sur le diagramme, on a ainsi :

- Un bloc de début 1 marquant le début du processus d'identification.
- Un bloc d'initialisation 2 des paramètres de saturation magnétique, désignés P. Les paramètres sont par exemple initialisés à la valeur P_0 correspondant aux paramètres de saturation magnétique linéaires.
- Un bloc d'attribution 3 du rang 1 au rang d'itération i.
- Un bloc de démarrage 4 d'une première séquence d'observation et d'identification. Cette première séquence a pour but de mettre à jour les paramètres de saturation magnétique en appliquant une première plage de référence permettant d'obtenir un flux de magnétisation proche du flux nominal.

- Un bloc de mise à jour 5 des paramètres de saturation magnétique avec les paramètres obtenus à l'issue de la première séquence d'observation et d'identification. Les paramètres sont par exemple mis à jour à la valeur P_1.

- Un bloc d'attribution 3' du rang 2 au rang d'itération i, mis en œuvre avant de débuter une séquence d'observation et d'identification.

- Un bloc de démarrage 6 d'une séquence d'observation et d'identification. Cette séquence démarre par l'application d'une trajectoire de flux ou de tension sur une plage de référence PLref_i. A l'issue de cette séquence, le bloc d'identification (B7 ou B15) dispose :

  - d'un profil réel de saturation magnétique à partir des données recueillies (courant de magnétisation et flux estimé) ;
  - du profil théorique basé sur les paramètres de saturation magnétique déterminés lors de l'itération précédente (P=P_1 au départ) ;
  - de l'écart (désigné $E_{r\_i}$ pour l'itération i) entre le profil réel et le profil théorique.

- Un bloc de comparaison 7 entre l'écart déterminé et le seuil prédéfini (désigné $E_{rmax}$).

- Un bloc de comparaison 9 entre l'écart $E_{r\_i}$ obtenu pour l'itération i et l'écart $E_{ri-1}$ obtenu lors de l'itération précédente si $E_{r\_i} > E_{rmax}$(branche N).

- Un bloc de mise à jour 10 des paramètres de saturation magnétique P avec les paramètres de saturation magnétique P_i identifiés lors de l'itération i si $E_{r\_i} < E_{ri-1}$ (branche Y).

- Un bloc de mise à jour 11 des paramètres de saturation magnétique P avec les paramètres de saturation magnétique P_i-2 identifiés lors de l'itération i-2 si $E_{r\_i} > E_{ri-1}$ (branche N).

- Deux blocs d'incrémentation 12 de l'itération i, i=i+1, avant de recommencer une nouvelle séquence d'observation et d'identification (bloc 6).

- Un bloc de vérification 13 de la plage de référence employée lors de la séquence d'observation et d'identification. Ce bloc permet de s'assurer que la plage de référence employée est suffisamment large et qu'elle permettra de couvrir une portion suffisamment large de la courbe de saturation magnétique.

- Un bloc de mise à jour 8 des paramètres de saturation magnétique P avec les paramètres de saturation magnétique P_i déterminés lors de cette itération i, ce bloc étant exécuté si $E_{r\_i} < E_{rmax}$(branche Y) et si la plage de référence PLref_i n'est pas suffisante (inférieure à une plage seuil PL_th).

- Un bloc de modification de la plage de référence 14 si la plage de référence employée lors de la séquence d'observation et d'identification n'est pas assez large (branche N - plage PLref_i inférieure à PL_th). Après une redéfinition de la plage de référence, une nouvelle séquence d'observation et d'identification peut débuter.

- Un bloc de validation 15 si la plage de référence PLref_i appliquée s'avère suffisamment large (branche Y - plage PLref_i supérieure à PL_th).

- Lors de la validation, un bloc de vérification 16 de l'écart $E_{r\_i}$ déterminé par rapport à $E_{rmax}$.

- Un bloc de sauvegarde 17 des paramètres de saturation magnétique identifiés lors de l'itération de rang i si $E_{r\_i} < E_{rmax}$(branche Y).

- Un bloc de fin 18 suite au bloc de sauvegarde 17.

- Un bloc d'échec 19 de l'identification si $E_{r\_i} > E_{rmax}$(branche N). Il s'agira alors de conserver par exemple les paramètres de saturation magnétique linéaires.

De manière plus détaillée, dans le cadre d'une loi de contrôle vectoriel de flux, le procédé présente les particularités décrites ci-dessous.

En référence à la figure 1, l'identification des paramètres de saturation magnétique est mise en œuvre dans le bloc d'identification B7 spécifique intégré dans la loi de commande.

Il s'appuie notamment sur une estimation du flux de magnétisation réalisée par le bloc B2 observateur de flux.

La vitesse du moteur est estimée à partir des courants mesurés (bloc observateur de vitesse B3). Le courant (bloc contrôle du courant et observateur du flux B2) et la vitesse (bloc contrôle de vitesse B1) sont commandés en utilisant des contrôleurs à action PI (proportionnel - intégral).

Pendant l'identification des paramètres de saturation magnétique, le moteur (à vide ou en charge) est contrôlé à une vitesse constante par la loi de contrôle vectorielle. On peut notamment considérer que le moteur tourne à la moitié de sa vitesse nominale (pour éviter la limitation de tension).

Au cours de chaque itération, le bloc B6 fait suivre au flux de référence $\overline{\phi}$ une trajectoire entre $P_0$ et $P_1$ (voir figure 4B). Un exemple de la trajectoire du flux pendant la première étape d'application de la trajectoire est illustré par la figure 4B.

Cette trajectoire est par exemple la suivante :

- Première phase ph1 de préparation à flux constant ;
- Deuxième phase ph2 de diminution du flux selon une rampe pour le ramener à une valeur minimale $P_0$.
- Troisième phase ph3 de stabilisation à la valeur minimale $P_0$.
- Quatrième phase ph4 d'augmentation du flux de la valeur minimale $P_0$ à l'instant $T_0$ jusqu'à atteindre la valeur maximale $P_1$ à l'instant $T_1$. L'étape d'identification des paramètres de saturation magnétique débute à l'instant $T_0$ et se termine à l'instant $T_1$. Le but est alors de balayer toute la zone de la courbe de saturation magnétique située entre $P_0$ et $P_1$. Le bloc

B7 d'identification des paramètres de saturation magnétique met alors en œuvre, entre $T_0$ et $T_1$, un algorithme de résolution de type moindre carré non-linéaire récursif qui permet d'estimer les paramètres de saturation.

- Une cinquième phase ph5 de réduction du flux.

Il faut noter que, dans le cas d'une commande de type scalaire, les mêmes phases ph1 à ph5 s'appliquent dans le cas de l'application d'une trajectoire de tension, entre une valeur minimale $U_0$ et une valeur maximale $U_1$, telle que représentée sur la figure 4A. Dans ce cas, le but est également de balayer toute la courbe de saturation magnétique.

Une modification de la plage de référence PLref_i consistera donc à modifier la valeur minimale et/ou la valeur maximale de flux ou de tension, notamment pour élargir cette plage de référence.

Une étape de comparaison de la plage de référence PLref_i appliquée avec un seuil minimal PL_th sera par exemple mise en œuvre pour décider que la plage de référence appliquée est suffisante ou non au cours de chaque itération.

La loi de contrôle permet d'estimer le flux dans le bloc observateur du flux B2. L'estimation du flux est un prérequis pour l'algorithme d'identification de la saturation magnétique. Il existe plusieurs méthodes pour estimer le flux. A titre d'exemple et sans perte de généralité, à moyenne et grande vitesse (dans notre cas), le flux peut être approximé en utilisant la relation suivante :

$$\widehat{\phi} = \frac{u_s}{|\omega_s|}.$$

Avec :

$$u_s = \sqrt{\frac{2}{3}\left(u_a^2 + u_b^2 + u_c^2\right)}$$

• qui est l'amplitude de la tension moteur où $u_a$, $u_b$ et $u_c$ sont les tensions appliquées par le variateur de vitesse au moteur.

• $\omega_s$ (rd/s) est la pulsation électrique des tensions appliquées par le variateur de vitesse au moteur.

Le modèle de saturation magnétique utilisé est représenté par une relation mathématique entre le courant de magnétisation $i_d$ et le flux de magnétisation $\phi$ :

$$i_d = f(\phi) = \frac{\phi}{L_0} \times \frac{1 - \alpha\phi}{1 - \beta\phi^2}$$

où $L_0$, $\alpha$ et $\beta$ sont les paramètres de saturation magnétique et $f$ est la fonction de saturation magnétique.

A chaque itération, c'est à partir d'un tel modèle de saturation magnétique que sont déterminés les paramètres de saturation magnétique. Le jeu de paramètres de saturation magnétique permettra d'obtenir le profil théorique qui approxime au mieux le profil réel.

La mesure de courant $i_d$ et le flux estimé $\widehat{\phi}$ sont utilisés en temps réel par le bloc B7 d'identification des paramètres de saturation magnétique pour estimer les paramètres de saturation en utilisant l'algorithme de résolution de type moindre carré non-linéaire récursif. Le but est alors de trouver les paramètres de la fonction de saturation f (décrite dans le modèle) qui approximent le mieux la relation "flux de magnétisation estimé-courant de magnétisation" qui est obtenue expérimentalement :

$$i_d = f(\widehat{\phi})$$

A la fin de chaque étape d'identification, l'algorithme détermine les valeurs des paramètres de saturation $L_0$, $\alpha$ et $\beta$ qui sont basées sur les données (flux et courant) obtenues pendant l'itération en cours. Ces paramètres seront utilisés lors de l'itération suivante.

Dans cette réalisation, l'écart d'acceptation entre le profil réel déterminé pour l'itération en cours et le profil théorique obtenu à partir des paramètres de saturation magnétique obtenues lors de l'itération précédente, est basé sur la grandeur $E_r$ suivante :

$$E_r = \frac{100}{T_1 - T_0} \int_{T_0}^{T_1} \left[\frac{\Delta\phi(t)}{\phi_n} + \frac{\Delta i_d(t)}{I_n}\right] dt$$

où :

$$\Delta\phi(t) = \left|\widehat{\phi}(t) - \bar{\phi}(t)\right|,$$

$$\Delta i(t) = \left|i_d(t) - \bar{\imath}_d(t)\right|,$$

- $\phi_n$, est le flux nominal du moteur,
- $I_n$ est le courant nominal du moteur,
- $T_0$ est le temps du début de l'identification et $T_1$ est le temps de la fin de l'identification (voir figure 4A).

Autrement dit, la grandeur $E_r$ représente la "distance" ou l'écart entre le profil réel de saturation obtenu lors de l'itération en cours et le profil théorique obtenu avec les paramètres de saturation déterminés lors de l'itération précédente.

La détermination de la grandeur $E_r$ se fait en ligne en temps réel en intégrant $\Delta\phi(t)$ et $\Delta i(t)$. Lors de chaque itération, on obtient une valeur de $E_r$ qui correspond aux paramètres de saturation magnétique obtenus à l'étape précédente. Il faut attendre la fin de chaque itération pour obtenir une nouvelle valeur de $E_r$.

A chaque itération, le critère d'acceptation des paramètres de saturation magnétique est :

$$E_r < E_{rmax}$$

où $E_{rmax}$ est un seuil prédéfini (fixé à 2 % par exemple). Ce seuil est mémorisé.

La figure 5 montre les profils de saturation magnétique réel (courbe Cr) et théorique (courbe Ct) obtenus lors d'une itération. Cette courbe montre clairement la non-linéarité du flux quand on s'éloigne du point de fonctionnement nominal (défini par le point au flux nominal $\phi_n$. Les inductances de magnétisation ($\hat{L}$ estimées et **L** théorique) sont calculées comme suivant :

$$\hat{L} = \frac{\hat{\phi}}{i_d} \ et \ \ L = \frac{\overline{\phi}}{i_d}.$$

Il faut comprendre que les mêmes particularités et les mêmes principes s'appliquent dans le cas d'une loi de commande de type scalaire.

Dans le cas d'une commande de type scalaire, l'identification des paramètres de saturation magnétique s'appuie sur le courant de magnétisation (Im) qui ne correspond pas directement au courant mesuré sur l'axe d.

Ci-dessous, on présente deux exemples d'utilisation de la courbe de saturation magnétique (grande vitesse, économie d'énergie), montrant l'intérêt de l'identification des paramètres de saturation magnétique pour une large plage de fonctionnement.

**Fonctionnement à grande vitesse :**

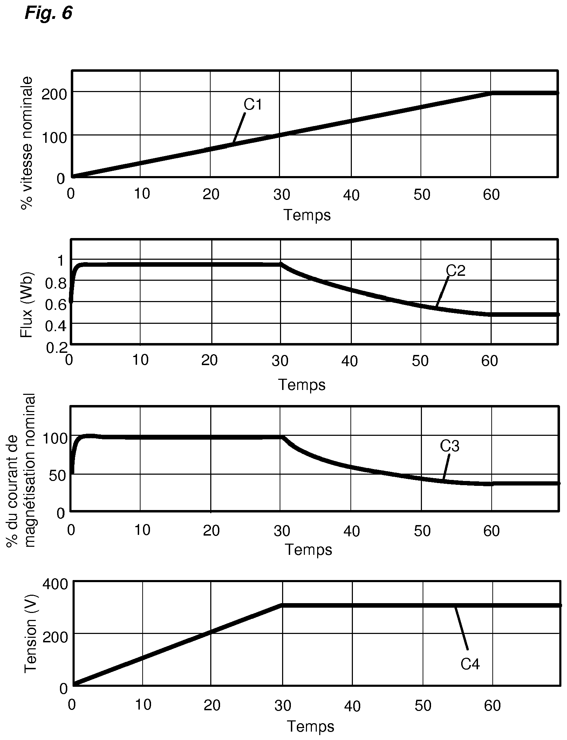

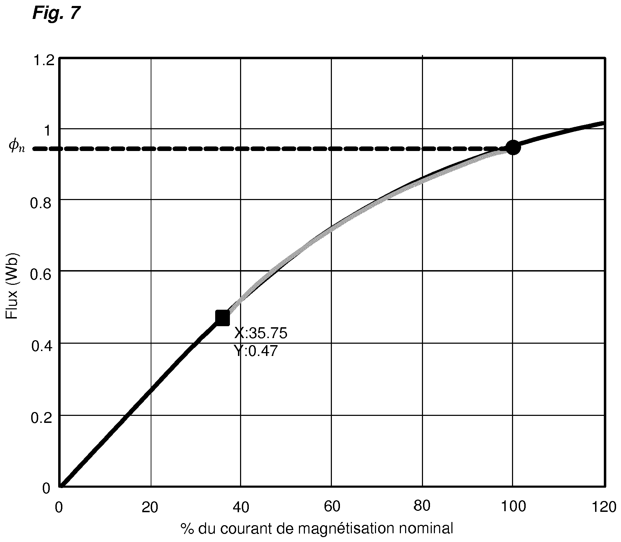

La figure 6 et la figure 7 montrent un cas de fonctionnement d'un moteur à grande vitesse. La vitesse varie entre 0 et 2 fois la vitesse nominale du moteur (première courbe C1). Ces figures montrent une variation du flux (courbes C2 et C3) dans une zone éloignée du flux nominal ce qui démontre l'intérêt de considérer les effets non linéaires de la saturation magnétique pour bien contrôler le moteur. En effet, quand la vitesse dépasse la vitesse nominale, le moteur est en limitation de tension (courbe C4) et pour augmenter la vitesse il faut baisser le flux (ce qu'on appelle défluxage - "Field Weakening").

La figure 7 montre ainsi que le courant de magnétisation baisse jusqu'à 35.75 % de sa valeur nominale à grande vitesse.

**Fonctionnement en mode économie d'énergie :**

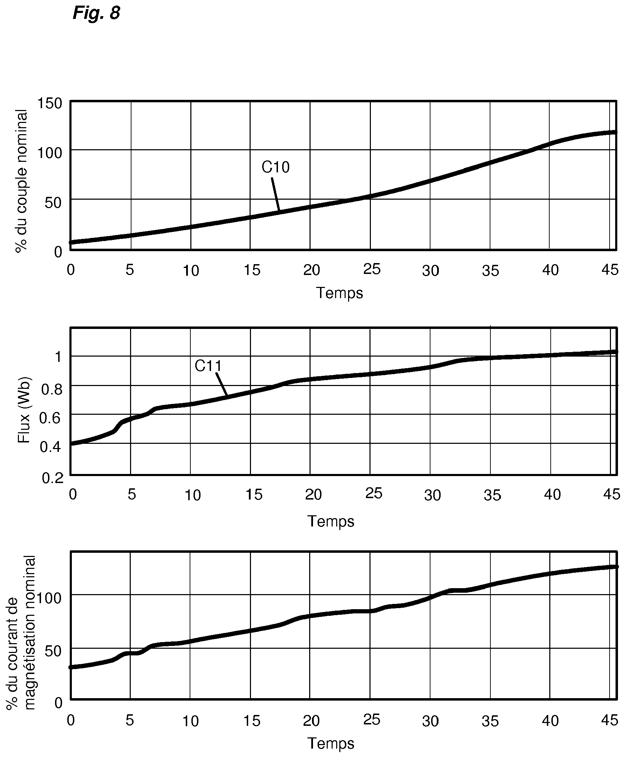

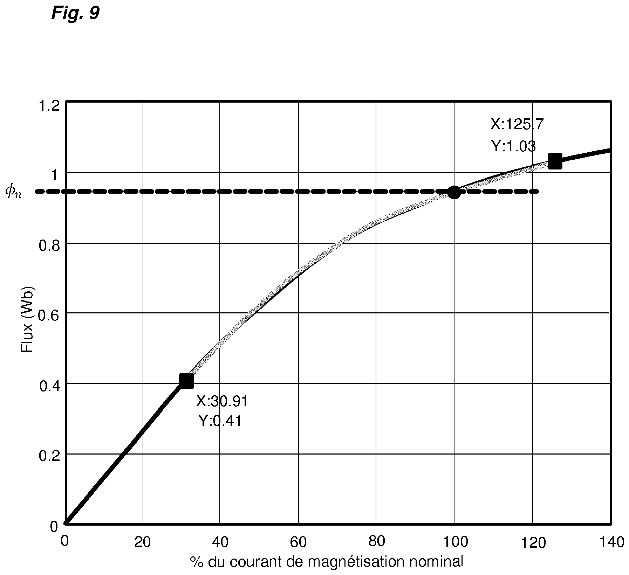

La figure 8 et la figure 9 montrent le fonctionnement en mode économie d'énergie avec le couple qui varie entre 5 % et 120 % du couple nominal (courbe C10). Ces figures montrent que le flux varie dans une large zone autour du flux nominal (courbe C11). En fait, quand le couple électromagnétique est faible, on baisse le flux pour réduire le courant dans le moteur et baisser ainsi sa consommation d'énergie. A l'opposé, quand le couple du moteur est très élevé, on augmente le flux pour baisser le courant de couple et optimiser ainsi l'énergie consommée par le moteur. Finalement, pendant ce mode de fonctionnement, le flux subit des fortes variations en fonction du niveau du couple.

La figure 9 montre la partie de la courbe de saturation magnétique parcourue pendant le fonctionnement en mode économie d'énergie. Cette figure montre que le courant de magnétisation varie entre 30.91 % et 125.7 % de sa valeur nominale.

Cette courbe peut être utilisée en fonctionnement normal du moteur pour compenser les effets de la saturation magnétique. Ceci permet d'améliorer les performances du contrôle du moteur : réduction de la consommation d'énergie et du courant total consommé pour le même point de fonctionnement (couple, vitesse) et maximisation du couple atteignable pour un courant maximal donné.

On comprend de ce qui précède que l'une des astuces de l'invention consiste à faire valider les paramètres de saturation magnétique déterminés lors de l'itération en cours en tenant compte du profil réel de saturation magnétique qu'ils sont censés approximer au mieux. Il serait possible d'attendre la fin de l'identification des paramètres de saturation magnétique pour l'itération en cours, puis de construire le profil théorique à partir de ces paramètres et de le comparer au profil réel pour comparaison. Mais cette solution n'est pas efficace. Dans la solution de l'invention, la comparaison du profil réel et du profil théorique, obtenu à partir des paramètres de saturation magnétique de l'itération précédente, peut être réalisé en parallèle de l'identification des paramètres de saturation magnétique pour l'itération en cours. La durée de traitement est donc optimisée.

Il en ressort que l'invention qui consiste à déterminer les paramètres de saturation magnétique qui approximent au mieux la courbe de saturation magnétique du moteur, sur une plage suffisamment étendue, présente de nombreux avantages, parmi lesquels :

- Améliorer la stabilité et les performances du moteur électrique en fonctionnement à très grande vitesse ;
- Améliorer le couple maximal fourni par le moteur électrique ;
- Réduire la consommation en courant par le moteur électrique ;
- Augmenter l'efficacité énergétique du moteur électrique.

**Revendications**

1. Procédé d'identification des paramètres de saturation magnétique d'un moteur électrique (M) asynchrone, **caractérisé en ce qu'**il consiste à mettre en œuvre une séquence comprenant une ou plusieurs itérations, chaque itération étant définie avec un rang i, avec i allant de 1 à n, chaque itération de rang i lorsque i est supérieur ou égal à 2 comprenant les étapes suivantes :

    a) Application d'une trajectoire à une tension de référence ou à un flux de référence, sur une plage de référence (PLref_i) présentant une amplitude de tension ou de flux entre une valeur minimale et une valeur maximale,

    b) Acquisition des valeurs des courants ($i_a$, $i_b$ et $i_c$) dans les phases du moteur électrique et détermination du courant de magnétisation correspondant,

    c) Estimation du flux de magnétisation ($\hat{\phi}$),

    d) Construction d'un profil réel pour l'itération de rang i comprenant ledit flux de magnétisation estimé en fonction du courant de magnétisation mesuré,

    e) Détermination des paramètres de saturation magnétique correspondant au profil réel de l'itération de rang i,

    f) Détermination d'un écart ($E_{r\_i}$) entre ledit profil réel pour l'itération de rang i et un profil théorique construit à partir des paramètres de saturation magnétique obtenus lors de l'itération de rang i-1,

    g) Validation des paramètres de saturation magnétique obtenus lors de l'itération de rang i lorsque ledit écart est inférieur à un seuil ($E_{rmax}$) et lorsque la plage de référence (PLref_i) appliquée en entrée présente une amplitude suffisante.

**2.** Procédé selon la revendication 1, **caractérisé en ce que** lorsque ledit écart ($E_{r\_i}$) est supérieur audit seuil ($E_{rmax}$), il consiste à mettre en œuvre l'étape suivante :

    - Comparaison dudit écart ($E_{r\_i}$) de l'itération de rang i par rapport à l'écart ($E_{ri}$-1) obtenu lors de l'itération de rang i-1,

        i. Si ledit écart de l'itération de rang i est inférieur à l'écart obtenu pour l'itération de rang i-1, mémorisation des paramètres de saturation magnétique obtenus pour l'itération de rang i et mise en œuvre de l'itération de rang i+1 avec une nouvelle plage de référence,

        ii. Si ledit écart de l'itération de rang i est supérieur à l'écart obtenu pour l'itération de rang i-1, mémorisation des paramètres de saturation magnétique obtenus lors de l'itération de rang i-2 et mise en œuvre de l'itération de rang i+1 avec une nouvelle plage de référence.

**3.** Procédé selon la revendication 1 ou 2, **caractérisé en ce qu'**il comporte, après l'étape f), une étape de vérification de la plage de référence utilisée par rapport à une plage seuil (PL_th).

**4.** Procédé selon la revendication 3, **caractérisé en ce qu'**il comporte, après ladite étape de vérification, une étape de mise à jour des paramètres de saturation magnétique avec les paramètres de saturation magnétique calculés lors de l'itération de rang i lorsque la plage de référence appliquée est inférieure à ladite plage seuil (PL_th).

**5.** Procédé selon la revendication 4, **caractérisé en ce qu'**il comporte une étape de modification de ladite plage de référence après ladite étape de mise à jour des paramètres de saturation magnétique et une mise en œuvre de l'itération de rang i+1 avec une nouvelle plage de référence.

**6.** Procédé selon l'une des revendications 1 à 5, **caractérisé en ce que** pour l'itération de rang i=1, les paramètres de saturation magnétique sont déterminés de sorte que le flux de magnétisation estimé ($\hat{\phi}$) soit sensiblement égal au flux nominal.

**7.** Système d'identification des paramètres de saturation magnétique d'un moteur électrique (M) asynchrone, **caractérisé en ce qu'**il est configuré pour mettre en œuvre une séquence comprenant une ou plusieurs itérations, chaque itération étant définie avec un rang i, avec i allant de 1 à n, et **en ce que**, pour chaque itération de rang i lorsque i est supérieur ou égal à 2, il comporte :

    a) Un module d'application d'une trajectoire à une tension de référence ou à un flux de référence, sur une plage de référence,

    b) Un module d'acquisition des courants ($i_a$, $i_b$ et $i_c$) dans les phases du moteur électrique et de détermination du courant de magnétisation correspondant,

    c) Un module d'estimation du flux de magnétisation ($\hat{\phi}$),

    d) Un module de construction d'un profil réel pour l'itération de rang i comprenant ledit flux de magnétisation estimé en fonction du courant de magnétisation mesuré,

    e) Un module de détermination des paramètres de saturation magnétique correspondant au profil réel de l'itération de rang i,

    f) Un module de détermination d'un écart ($E_{r\_i}$) entre ledit profil réel pour l'itération de rang i et un profil théorique construit à partir des paramètres de saturation magnétique obtenus lors de l'itération de rang i-1,

    g) Un module de validation des paramètres de saturation magnétique obtenus lors de l'itération de rang i lorsque ledit écart est inférieur à un seuil ($E_{rmax}$) et lorsque la plage de référence (PLref_i) appliquée en entrée présente une amplitude suffisante.

8. Système selon la revendication 7, **caractérisé en ce que** lorsque ledit écart ($E_{r\_i}$) est supérieur audit seuil ($E_{rmax}$), ledit système comporte un module de comparaison dudit écart ($E_{r\_i}$) de l'itération de rang i par rapport à l'écart ($E_{r\text{-}1}$) obtenu lors de l'itération de rang i-1, et **en ce que** :

   i. Si ledit écart de l'itération de rang i est inférieur à l'écart obtenu pour l'itération de rang i-1, ledit système est configuré pour exécuter un module de mémorisation des paramètres de saturation magnétique obtenus pour l'itération de rang i et de mise en œuvre de l'itération de rang i+1 avec une nouvelle plage de référence,
   ii. Si ledit écart de l'itération de rang i est supérieur à l'écart obtenu pour l'itération de rang i-1, ledit système est configuré pour exécuter un module de mémorisation des paramètres de saturation magnétique obtenus lors de l'itération de rang i-2 et de mise en œuvre de la phase de rang i+1 avec une nouvelle plage de référence.

9. Système selon la revendication 7, **caractérisé en ce qu'**il comporte un module de vérification de la plage de référence utilisée par rapport à une plage seuil (PL_th), exécuté lorsque ledit écart est inférieur à un seuil ($E_{rmax}$).

10. Système selon la revendication 9, **caractérisé en ce qu'**il comporte un module de mise à jour des paramètres de saturation magnétique avec les paramètres de saturation magnétique calculés lors de l'itération de rang i lorsque la plage de référence appliquée est inférieure à ladite plage seuil (PL_th).

11. Système selon la revendication 10, **caractérisé en ce qu'**il comporte un module de modification de ladite plage de référence après ladite étape de mise à jour des paramètres de saturation magnétique et une mise en œuvre de l'itération de rang i+1 avec une nouvelle plage de référence.

12. Système selon l'une des revendications 7 à 11, **caractérisé en ce que** pour l'itération de rang i=1, les paramètres de saturation magnétique sont déterminés de sorte que le flux de magnétisation estimé ($\hat{\phi}$) soit sensiblement égal au flux nominal.

13. Variateur de vitesse, **caractérisé en ce qu'**il comporte un système d'identification tel que défini dans l'une des revendications 7 à 12.

**Patentansprüche**

1. Verfahren zur Identifizierung der Parameter der magnetischen Sättigung eines asynchronen Elektromotors (M), **dadurch gekennzeichnet, dass** es darin besteht, eine Folge durchzuführen, die eine oder mehrere Iterationen umfasst, wobei jede Iteration mit einem Rang i definiert ist, wobei i von 1 bis n läuft, wobei jede Iteration vom Rang i, wenn i größer oder gleich 2 ist, die folgenden Schritte umfasst:

   a) Anlegen einer Trajektorie an eine Referenzspannung oder an einen Referenzmagnetfluss auf einem Referenzbereich (PLref_i), der eine Spannungs- oder Magnetflussamplitude zwischen einem minimalen Wert und einem maximalen Wert aufweist,
   b) Erfassung der Werte der Ströme ($i_a$, $ib$ und $i_c$) in den Phasen des Elektromotors und Bestimmung des entsprechenden Magnetisierungsstroms,
   c) Schätzung des Magnetisierungsflusses ($\hat{\phi}$),
   d) Konstruktion eines realen Profils für die Iteration vom Rang i, welches den in Abhängigkeit von dem gemessenen Magnetisierungsstrom geschätzten Magnetisierungsfluss umfasst,
   e) Bestimmung der Parameter der magnetischen Sättigung, die dem realen Profil der Iteration vom Rang i entsprechen,
   f) Bestimmung einer Abweichung ($E_{r\_i}$) zwischen dem realen Profil für die Iteration vom Rang i und einem theoretischen Profil, das anhand der Parameter der magnetischen Sättigung konstruiert wurde, die in der Iteration vom Rang i-1 erhalten wurden,
   g) Validierung der Parameter der magnetischen Sättigung, die in der Iteration vom Rang i erhalten wurden, wenn die Abweichung kleiner als ein Schwellenwert ($E_{rmax}$) ist und wenn der am Eingang angelegte Referenzbereich (PLref_i) eine ausreichende Amplitude aufweist.

2. Verfahren nach Anspruch 1, **dadurch gekennzeichnet, dass**, wenn die Abweichung ($E_{r\_i}$) größer als der Schwellenwert ($E_{rmax}$) ist, es darin besteht, den folgenden Schritt durchzuführen:

   - Vergleich der Abweichung ($E_{r\_i}$) der Iteration vom Rang i mit der Abweichung ($E_{r\text{-}1}$), die in der Iteration vom Rang i-1 erhalten wurde,

   i. falls die Abweichung der Iteration vom Rang i kleiner als die Abweichung ist, die für die Iteration vom Rang i-1 erhalten wurde, Speicherung der Parameter der magnetischen Sättigung, die für die Iteration vom Rang i erhalten wurden, und Durchführung der Iteration vom Rang i+1 mit einem neuen Referenzbereich,
   ii. falls die Abweichung der Iteration vom Rang i größer als die Abweichung ist, die für die Iteration vom Rang i-1 erhalten wurde, Speicherung der Parameter der magnetischen Sättigung, die in der Iteration vom Rang i-2 erhalten wurden, und Durchführung der Iteration vom Rang i+1 mit einem neuen Referenzbereich.

3. Verfahren nach Anspruch 1 oder 2, **dadurch gekennzeichnet, dass** es nach dem Schritt f) einen Schritt der Überprüfung des verwendeten Referenzbereichs in Bezug auf einen Schwellenwertbereich (PL_th) umfasst.

4. Verfahren nach Anspruch 3, **dadurch gekennzeichnet, dass** es nach dem Schritt der Überprüfung einen Schritt der Aktualisierung der Parameter der magnetischen Sättigung mit den in der Iteration vom Rang i berechneten Parametern der magnetischen Sättigung umfasst, wenn der angewendete Referenzbereich kleiner als der Schwellenwertbereich (PL_th) ist.

5. Verfahren nach Anspruch 4, **dadurch gekennzeichnet, dass** es einen Schritt der Änderung des Referenzbereichs nach dem Schritt der Aktualisierung der Parameter der magnetischen Sättigung und eine Durchführung der Iteration vom Rang i+1 mit einem neuen Referenzbereich umfasst.

6. Verfahren nach einem der Ansprüche 1 bis 5, **dadurch gekennzeichnet, dass** für die Iteration vom Rang i=1 die Parameter der magnetischen Sättigung derart bestimmt werden, dass der geschätzte Magnetisierungsfluss ($\hat{\phi}$) im Wesentlichen gleich dem Nenn-Fluss ist.

7. System zur Identifizierung der Parameter der magnetischen Sättigung eines asynchronen Elektromotors (M), **dadurch gekennzeichnet, dass** es dafür ausgelegt ist, eine Folge durchzuführen, die eine oder mehrere Iterationen umfasst, wobei jede Iteration mit einem Rang i definiert ist, wobei i von 1 bis n läuft, und dadurch, dass es für jede Iteration vom Rang i, wenn i größer oder gleich 2 ist, umfasst:

a) ein Modul zum Anlegen einer Trajektorie an eine Referenzspannung oder an einen Referenzmagnetfluss auf einem Referenzbereich,
b) ein Modul zur Erfassung der Ströme ($i_a$, $ib$ und $i_c$) in den Phasen des Elektromotors und zur Bestimmung des entsprechenden Magnetisierungsstroms,
c) ein Modul zur Schätzung des Magnetisierungsflusses ($\hat{\phi}$),
d) ein Modul zur Konstruktion eines realen Profils für die Iteration vom Rang i, welches den in Abhängigkeit von dem gemessenen Magnetisierungsstrom geschätzten Magnetisierungsfluss umfasst,

e) ein Modul zur Bestimmung der Parameter der magnetischen Sättigung, die dem realen Profil der Iteration vom Rang i entsprechen,
f) ein Modul zur Bestimmung einer Abweichung ($E_{r\_i}$) zwischen dem realen Profil für die Iteration vom Rang i und einem theoretischen Profil, das anhand der Parameter der magnetischen Sättigung konstruiert wurde, die in der Iteration vom Rang i-1 erhalten wurden,
g) ein Modul zur Validierung der Parameter der magnetischen Sättigung, die in der Iteration vom Rang i erhalten wurden, wenn die Abweichung kleiner als ein Schwellenwert ($E_{rmax}$) ist und wenn der am Eingang angelegte Referenzbereich (PLref_i) eine ausreichende Amplitude aufweist.

8. System nach Anspruch 7, **dadurch gekennzeichnet, dass**, wenn die Abweichung ($E_{r\_i}$) größer als der Schwellenwert ($E_{rmax}$) ist, das System ein Modul zum Vergleich der Abweichung ($E_{r\_i}$) der Iteration vom Rang i mit der Abweichung ($\bar{E}_{ri\text{-}1}$), die in der Iteration vom Rang i-1 erhalten wurde, aufweist, und dadurch, dass:

i. falls die Abweichung der Iteration vom Rang i kleiner als die Abweichung ist, die für die Iteration vom Rang i-1 erhalten wurde, das System dafür ausgelegt ist, ein Modul zur Speicherung der Parameter der magnetischen Sättigung, die für die Iteration vom Rang i erhalten wurden, und zur Durchführung der Iteration vom Rang i+1 mit einem neuen Referenzbereich auszuführen,
ii. falls die Abweichung der Iteration vom Rang i größer als die Abweichung ist, die für die Iteration vom Rang i-1 erhalten wurde, das System dafür ausgelegt ist, ein Modul zur Speicherung der Parameter der magnetischen Sättigung, die in der Iteration vom Rang i-2 erhalten wurden, und zur Durchführung der Iteration vom Rang i+1 mit einem neuen Referenzbereich auszuführen.

9. System nach Anspruch 7, **dadurch gekennzeichnet, dass** es ein Modul zur Überprüfung des verwendeten Referenzbereichs in Bezug auf einen Schwellenwertbereich (PL_th) umfasst, das ausgeführt wird, wenn die Abweichung kleiner als ein Schwellenwert ($E_{rmax}$) ist.

10. System nach Anspruch 9, **dadurch gekennzeichnet, dass** es ein Modul zur Aktualisierung der Parameter der magnetischen Sättigung mit den in der Iteration vom Rang i berechneten Parametern der magnetischen Sättigung, wenn der angewendete Referenzbereich kleiner als der Schwellenwertbereich (PL_th) ist, umfasst.

11. System nach Anspruch 10, **dadurch gekennzeichnet, dass** es ein Modul zur Änderung des Referenzbereichs nach dem Schritt der Aktualisierung der Parameter der magnetischen Sättigung und eine Durchführung der Iteration vom Rang i+1 mit einem neuen Referenzbereich umfasst.

12. System nach einem der Ansprüche 7 bis 11, **dadurch gekennzeichnet, dass** für die Iteration vom Rang i=1 die Parameter der magnetischen Sättigung derart bestimmt werden, dass der geschätzte Magnetisierungsfluss $(\hat{\phi})$ im Wesentlichen gleich dem Nenn-Fluss ist.

13. Umrichter, **dadurch gekennzeichnet, dass** er ein System zur Identifizierung, wie in einem der Ansprüche 7 bis 12 definiert, aufweist.

**Claims**

1. Method of identifying the magnetic saturation parameters of an asynchronous electric motor (M), **characterized in that** it consists in implementing a sequence comprising one or more iterations, each iteration being defined with a rank i, with i ranging from 1 to n, each iteration of rank i when i is greater than or equal to 2 comprising the following steps:

   a) Applying a trajectory to a reference voltage or to a reference flux, over a reference range (PLref_i) having a voltage or flux amplitude between a minimum value and a maximum value,
   b) Acquiring the values of the currents ($i_a$, $i_b$ and $i_c$) in the phases of the electric motor and determining the corresponding magnetization current,
   c) Estimating the magnetization flux $(\hat{\phi})$,
   d) Constructing an actual profile for the iteration of rank i comprising said estimated magnetization flux according to the measured magnetization current,
   e) Determining the magnetic saturation parameters corresponding to the actual profile of the iteration of rank i,
   f) Determining a deviation ($E_{r\_i}$) between said actual profile for the iteration of rank i and a theoretical profile constructed from the magnetic saturation parameters obtained during the iteration of rank i-1,
   g) Validating the magnetic saturation parameters obtained during the iteration of rank i when said deviation is less than a threshold ($E_{rmax}$) and when the reference range (PLref_i) applied at the input has a sufficient amplitude.

2. Method according to Claim 1, **characterized in that** when said deviation ($E_{r\_i}$) is greater than said threshold ($E_{rmax}$), it consists in implementing the following step:

   - Comparing said deviation ($E_{r\_i}$) of the iteration of rank i in relation to the deviation ($E_{r_{i-1}}$) obtained during the iteration of rank i-1,

     i. If said deviation of the iteration of rank i is less than the deviation obtained for the iteration of rank i-1, storing the magnetic saturation parameters obtained for the iteration of rank i and implementing the iteration of rank i+1 with a new reference range,
     ii. If said deviation of the iteration of rank i is greater than the deviation obtained for the iteration of rank i-1, storing the magnetic saturation parameters obtained during the iteration of rank i-2 and implementing the iteration of rank i+1 with a new reference range.

3. Method according to Claim 1 or 2, **characterized in that** it comprises, after step f), a step of verifying the reference range used in relation to a threshold range (PL_th).

4. Method according to Claim 3, **characterized in that** it comprises, after said step of verifying, a step of updating the magnetic saturation parameters with the magnetic saturation parameters calculated during the iteration of rank i when the applied reference range is less than said threshold range (PL_th).

5. Method according to Claim 4, **characterized in that** it comprises a step of modifying said reference range after said step of updating the magnetic saturation parameters and implementing the iteration of rank i+1 with a new reference range.

6. Method according to one of Claims 1 to 5, **characterized in that** for the iteration of rank i=1, the magnetic saturation parameters are determined so that the estimated magnetization flux $(\hat{\phi})$ is substantially equal to the nominal flux.

7. System of identifying the magnetic saturation parameters of an asynchronous electric motor (M), **characterized in that** it is set up for implementing a sequence comprising one or more iterations, each iteration being defined with a rank i, with i ranging from 1 to n, and **in that** for each iteration of rank i when i is greater than or equal to 2 it comprises:

   a) A module for applying a trajectory to a reference voltage or to a reference flux, over a reference range,

b) A module for acquiring the currents ($i_a, i_b$ and $i_c$) in the phases of the electric motor and determining the corresponding magnetization current,

c) A module for estimating the magnetization flux ($\hat{\phi}$),

d) A module for constructing an actual profile for the iteration of rank i comprising said estimated magnetization flux according to the measured magnetization current,

e) A module for determining the magnetic saturation parameters corresponding to the actual profile of the iteration of rank i,

f) A module for determining a deviation ($E_{r\_i}$) between said actual profile for the iteration of rank i and a theoretical profile constructed from the magnetic saturation parameters obtained during the iteration of rank i -1,

g) A module for validating the magnetic saturation parameters obtained during the iteration of rank i when said deviation is less than a threshold ($E_{rmax}$) and when the reference range (PLref_i) applied at the input has a sufficient amplitude.

8. System according to Claim 7, **characterized in that** when said deviation ($E_{r\_i}$) is greater than said threshold ($E_{rmax}$), said system comprises a module for comparing said deviation ($E_{r\_i}$) of the iteration of rank i in relation to the deviation ($E_{r\_1}$) obtained during the iteration of rank i-1, and **in that**:

    i. If said deviation of the iteration of rank i is less than the deviation obtained for the iteration of rank i-1, said system is set up for executing a module for storing the magnetic saturation parameters obtained for the iteration of rank i and implementing the iteration of rank i+1 with a new reference range,

    ii. If said deviation of the iteration of rank i is greater than the deviation obtained for the iteration of rank i-1, said system is set up for executing a module for storing the magnetic saturation parameters obtained during the iteration of rank i-2 and implementing the phase of rank i+1 with a new reference range.

9. System according to Claim 7, **characterized in that** it comprises a module for verifying the reference range used in relation to a threshold range (PL_th), executed when said deviation is less than a threshold ($E_{rmax}$).

10. System according to Claim 9, **characterized in that** it comprises a module for updating the magnetic saturation parameters with the magnetic saturation parameters calculated during the iteration of rank i when the applied reference range is less than said threshold range (PL_th).

11. System according to Claim 10, **characterized in that** it comprises a module for modifying said reference range after said step of updating the magnetic saturation parameters and implementing the iteration of rank i+1 with a new reference range.

12. System according to one of Claims 7 to 11, **characterized in that** for the iteration of rank i=1, the magnetic saturation parameters are determined so that the estimated magnetization flux ($\hat{\phi}$) is substantially equal to the nominal flux.

13. Variable speed drive, **characterized in that** it comprises a system of identifying as defined in one of Claims 7 to 12.

*Fig. 1*

B6

Trajectoire de flux

$\bar{\phi}$

$\bar{\imath}_d$

$\bar{\imath}_q$

$L_0$
$\alpha$
$\beta$

Identification paramètres de saturation

$\hat{\phi}$

$i_d$

B7

B1

$\hat{\phi}$

$\bar{\omega}$

Contrôle de vitesse

$\bar{\imath}_q$

$\hat{\omega}$

B2

Contrôle du courant et observateur du flux

$u_d$

$u_q$

$i_d$

$i_q$

d, q

a,b,c

B4

$u_a$

$u_b$

$u_c$

INV

$\theta_s$

d, q

a,b,c

B5

$i_d$

$i_q$

$i_a$

$i_b$

$i_c$

M

B3

$\bar{\imath}_q$

$\hat{\phi}$

$i_q$

Observateur de vitesse

$\theta_s$

*Fig. 2*

B13

Trajectoire de tension

$U$

$U$

$L_0$
$\alpha$
$\beta$

Identification paramètres de saturation

B15

$\hat{\phi}$

$i_m$

B10

Commande scalaire en tension

$\bar{\omega}$

$u_d$

$u_q$

d, q

a,b,c

B11

$u_a$

$u_b$

$u_c$

INV

$\theta_s$

d, q

a,b,c

B12

$i_d$

$i_q$

$i_a$

$i_b$

$i_c$

M

Observateur du courant de magnétisation et du flux

B14

**Fig. 3**

Début — 1

Initialisation
paramètres
P=P_0 — 2

i=1 — 3

Première séquence
d'observation et
d'identification — 4

Mise à jour
paramètres
P=P_1 — 5

i=2 — 3'

Modification
plage de référence
Plref_i — 14

i=i+1 — 12

Séquence
d'observation et
d'identification — 6

i=i+1 — 12

Mise à jour
paramètres
P=P_i — 8

Mise à jour
paramètres
P=P_i — 10

Mise à jour
paramètres
P=P_i-2 — 11

Er_i<Er_max ? — 7

N

Y

N

Plage de
référence
PLref_i
OK ? — 13

Y

Er_i<Er_i-1 — 9

N

Validation — 15

Er_i<Er_max ? — 16

Y

Sauvegarde
paramètres
P=P_i — 17

Fin — 18

N

Echec — 19

**Fig. 4A**

**Fig. 4B**

**Fig. 5**

Courbe de saturation magnétique

*Fig. 6*

*Fig. 7*

X:35.75
Y:0.47

$\phi_n$

Flux (Wb)

% du courant de magnétisation nominal

*Fig. 8*

*Fig. 9*

**EP 3 451 525 B1**

## RÉFÉRENCES CITÉES DANS LA DESCRIPTION

**Documents brevets cités dans la description**

- WO 2012123255 A2
- JP 2010068627 A